# EUROPÄISCHE PATENTSCHRIFT

(11) **EP 0 450 135 B1**
(45) Veröffentlichungstag und Bekanntmachung des Hinweises auf die Patenterteilung: **09.03.1994**
(21) Anmeldenummer: 90111434.8
(22) Anmeldetag: 18.06.1990
(51) Int. Cl.: B25F 5/00, B23B 47/28

(54) **Handbohrwerkzeug zum Ausbohren von Punktschweissstellen**
Hand-drill for drilling-out of spot-welds
Perceuse pour l'élimination des points de soudage

(30) Priorität: 05.04.1990 DE 9003950 U
(43) Veröffentlichungstag der Anmeldung: 09.10.1991
(73) Patentinhaber: MV MARKETING + VERTRIEBS GMBH WIELÄNDER & SCHILL., 78054 Villingen-Schwenningen (DE)
(72) Erfinder: Heiter, Uwe, D-7730 Villingen-Schwenningen (DE); Schill, Josef, D-7737 Bad Dürrheim 3 (DE)
(74) Vertreter: Blumbach, Kramer & Partner

(56) Entgegenhaltungen:
- EP-A- 0 102 412
- DE-C- 111 498
- GB-A- 529 217
- GB-A- 782 666
- US-A- 1 367 969
- US-A- 1 477 355
- US-A- 3 710 832
- US-A- 4 530 142
- US-A- 4 669 929
- US-A- 4 785 517

## Beschreibung

Die Erfindung betrifft ein Handbohrwerkzeug, insbesondere zum Ausbohren von Punktschweißstellen mit einer an dem Bohrmaschinenkörper lösbar angebrachten Gegenlagereinrichtung, die über einen Betätigungshebel, der in einen Handgriff ausläuft, in Richtung der Bohrachse verschiebbar ist.

Aus der EP-A1-0 102 412 ist ein Handbohrwerkzeug zum Ausbohren von Punktschweißstellen bekannt. Dabei ist eine Gegenlagereinrichtung mittels eines Einspannrings fest mit dem Bohrmaschinenkörper verbunden. Der Betätigungshebel ist über dem Bohrmaschinenkörper parallel zur Bohrachse mittels Gelenk an einem Schenkel des Gegenlagerbügels und an der Einspannhülse befestigt. Es ist ein Nachteil, daß der Gegenlagerbügel nicht von dem Bohrmaschinenkörper abnehmbar ist und bei der Betätigung störende Momente erzeugt werden. Aus der DE-A-26 52 930 ist eine Ausbohrvorrichtung bekannt, die aus einem Handbohrer und einem an der Seite des Gerätes verlaufenden Gegenlagerbügel besteht. Dies ist mit dem Nachteil verbunden, daß beim Betätigen der Gegenlagervorrichtung Kräfte nur einseitig und außerhalb des Bohrmaschinenkörpers angreifen und somit ungünstige Momente erzeugt werden. Bei dem bekannten Werkzeug ist der Gegenlagerbügel zwar lösbar an dem Bohrmaschinenkörper angebracht, er kann aber nur in umständlicher Weise von diesem wieder abgenommen werden. Es ist ein weiterer Nachteil der Vorrichtung, daß ihre Handhabune recht umständlich ist.

Bei der nach der DE-A-22 40 066 bekannten Vorrichtung ist ebenfalls ein lösbarer Gegenlagerbügel vorgesehen, wobei über einen Spannring der Gegenlagerbügel mit Hebelanordnung seitlich am Werkzeug angeordnet ist. Dadurch treten ebenfalls bei der Bedienung ungünstige Momente auf, und Hebel und Werkzeug können nicht mit einer Hand bedient werden.

Demgemäß liegt der Erfindung die Aufgabe zugrunde, ein Handbohrwerkzeug zum Ausbohren von Punktschweißstellen zu schaffen, bei dem die Gegenlagereinrichtung schnell und ohne Montageaufwand abnehmbar ist, bei dem die Kräfte über die Aufsatzhülse direkt in der Bohrachse am Bohrmaschinenkörper angreifen und dadurch keine Momente erzeugen, bei dem der Gegenlagerbügel und die Aufsatzhülse eine körperliche Einheit bilden und verdrehbar auf dem Bohrmaschinenkörper angeordnet sind und eine einfache Bedienungsmöglichkeit mit einer Hand besteht.

Die Erfindung besteht darin, daß bei einem Handbohrwerkzeug der eingangs genannten Art ein Hebel an einer Aufsatzhülse angreift, die den Bohrmaschinenkörper umschließt und an der die Gegenlagereinrichtung angebracht ist, daß die Aufsatzhülse in Bezug auf den Bohrmaschinenkörper axial verschiebbar ausgebildet ist, daß die Aufsatzhülse in Bezug auf den Hebel verdrehbar ist und daß die Achse des an der Aufsatzhülse angreifenden Hebels die Achse des Bohrmaschinenkörpers zur Vermeidung von Momenten schneidet.

Zweckmäßig drängt eine Feder die Aufsatzhülse nach vorn. Die Feder besteht vorteilhafterweise aus einer Schraubenfeder, die im Inneren der Aufsatzhülse angeordnet ist, den Bohrmaschinenkörper umschließt und am vorderen Ende auf einem Führungsflansch abgestützt ist, dessen Innendurchmesser dem Außendurchmesser des Bohrmaschinenkörpers entspricht und dessen rückwärtiges Ende gegen einen Anschlag am Bohrmaschinenkörper zu liegen kommt.

Eine vorteilhafte Ausgestaltung sieht vor, daß der Anschlag am Bohrmaschinenkörper als Führungsring ausgebildet ist, dessen Außendurchmesser dem Innendurchmesser der Führungshülse entspricht.

Eine Weiterbildung besteht darin, daß an dem dem Handgriff gegenüberliegenden Ende des Hebels ein Halteglied vorgesehen ist, das an einem Widerlager am Bohrmaschinenkörper eingehängt ist und somit ohne Hilfsmittel mit einem Griff abnehmbar ist. Dabei ist die eingestellte Bohrtiefe mit oder ohne Gegenlager konstant, d. h. die Bohrtiefe bleibt unbeeinflußt. Dabei besteht das Halteglied zweckmäßig aus einem Ring und das Widerlager aus einem Haken, in den der Ring bei einer Bewegung der Aufsetzhülse gegen die Federkraft einlegbar ist.

Dabei sieht eine vorteilhafte Weiterbildung vor, daß der Hebel an dem dem Handgriff gegenüberliegenden Ende in zwei halbringförmig ausgebildete, die Aufsatzhülse umschließende Arme ausläuft, die sich an dem an einem rückwärtigen Ende der Aufsatzhülse vorstehenden Flansch vorzugsweise nockenförmig abstützen.

Eine Weiterbildung zeichnet sich dadurch aus, daß der Hebel vor dem Hebelhandgriff durch eine Feder den Einschaltknopf der Maschine auslöst und die Maschine in Gang setzt und daß bei Betätigung vorzugsweise der Hebelhandgriff in eine Ausnehmung am Bohrmaschinenhandgriff zu liegen kommt.

Um ein seitliches Abrutschen des Handbohrwerkzeuges zu vermeiden, ist die Stirnseite des dem Gegenlager gegenüberliegenden Tiefenlagers mit Riffelungen versehen.

Eine Fortbildung des erfindungsgemäßen Gegenstandes besteht darin, daß die Gegenlagereinrichtung mit einer Einstellschraube als dem Tiefenlager gegenüberliegendem Gegenlager versehen ist.

Zweckmäßig befindet sich zwischen Aufsatzhülse und Bohrfutter zur Einstellung des Bohrers entsprechend einer Markierung, vorzugsweise in Form einer Einkerbung oder Nut, ein Drehring.

Eine vorteilhafte Ausgestaltung der Erfindung sieht weiter vor, daß die Aufsatzhülse für unterschiedliche Arbeitsgänge Gegenlager mit unterschiedlicher Bügelausgestaltung trägt. In vorteilhafter Weise werden die am Hebel angreifenden Kräfte durch eine Übersetzung zu einem erhöhten Anpreßdruck am Gegenlager verstärkt.

Die Erfindung soll anhand eines Ausführungsbeispiels unter Bezugnahme auf die beigefügten Zeichnungen näher erläutert werden.
Es zeigen:
- Fig. 1: eine Seitenansicht des erfindungsgemäßen Handbohrwerkzeuges,
- Fig. 2: einen Längsschnitt durch die Aufsatzhülse nach Fig. 1.

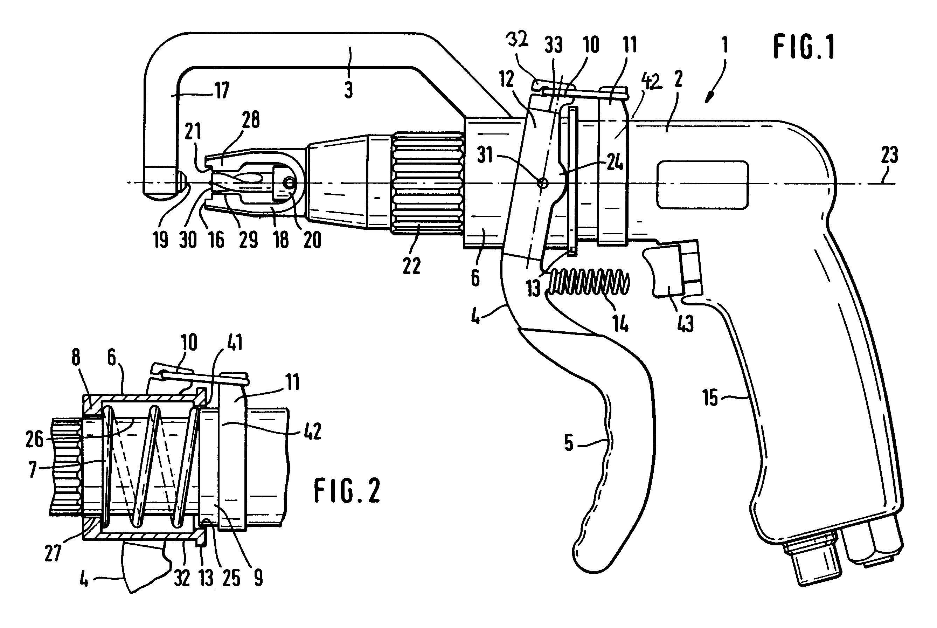

In Fig. 1 ist ein Ausführungsbeispiel dargestellt, das aus einer pneumatischen Handbohrmaschine 1 und einer Gegenlagereinrichtung 3 besteht. Diese Gegenlagereinrichtung 3 umfaßt einen Hebel 4, der an einer Aufsatzhülse 6 angreift, die mit einem Gegenlagerbügel 17 verbunden ist. Die Hebelachse 31 schneidet die Achse 23 des Bohrmaschinenkörpers 2. Die Aufsatzhülse 6 ist in Bezug auf den Bohrmaschinenkörper 10 axial verschiebbar ausgebildet.

Der Hebel 4 besitzt einen Handgriff 5und kann an dem diesem gegenüberliegenden Ende mit zwei halbringförmig ausgebildeten, die Aufsatzhülse 6 umschließende Arme 12 versehen sein, die beispielsweise mit einer Klammer oder durch einen Haltering 10 miteinander verbunden sind. Die die Aufsatzhülse 6 umschließenden Arme 12 stützen sich mit einem Nocken 24 an einem am rückwärtigen Ende 32 der Aufsatzhülse 6 vorstehenden Flansch 13 ab. Die Nocken 24 liegen in einem Abstand von 180 gegenüber. Der Flansch 13 und die nockenförmigen Ausbuchtungen 24 bilden den Übertragungsweg, über den die Hebelkräfte beim Betätigen des Hebelgriffs 5 auf die Aufsatzhülse 6 und damit auf den Gegenlagerbügel 17 übertragen werden. Die Aufsatzhülse 6 ist dabei in Bezug auf den Bohrmaschinenkörper 2 axial verschiebbar ausgebildet.

Das an dem dem Handgriff 5 am Hebel 4 gegenüberliegende Ende 32 vorgesehene Halteglied 10 ist an einem Widerlager 11 am Bohrmaschinenkörper 10 eingehängt. Das Halteglied 10 besteht aus einem Ring, wobei das Widerlager 11 hakenförmig ausgebildet ist. Bei einer Bewegung der Aufsatzhülse 6 zurück auf den Bohrmaschinenkörper 2 kann der Ring 10 aus dem Haken 11 gelöst werden und somit die Aufsatzhülse 6 und damit die gesamte Gegenlagereinrichtung 3 von dem Bohrmaschinenkörper 2 entfernt werden. Wie im einzelnen aus Fig. 2 zu ersehen ist, weist das als Flansch 13 ausgebildete rückwärtige Ende der Aufsatzhülse 6 einen innenliegenden, konzentrisch verlaufenden Steg 25 auf, dessen Höhe so bemessen ist, daß die Aufsatzhülse 6 mit ausreichendem Spiel über einem vor dem Widerlager 11 angebrachten Anschlag 9 führbar ist. Der Anschlag 9 am Bohrmaschinenkörper 2 ist hierin als Führungsring ausgebildet. Das vordere Ende der Aufsatzhülse 6 weist einen Führungsflansch 8 auf, dessen Innendurchmesser dem Außendurchmesser des Bohrmaschinenhalses 26 des Bohrmaschinenkörpers 2 entspricht. Die Länge des Führungsflansches 8 ist so gewählt, daß die Auflagefläche 27 ausreichend groß ist, um die Aufsatzhülse 6 an dem Bohrmaschinenhals 26 zu führen und ein Verkanten der Gegenlagereinrichtung 3 zu verhindern. In den Innenraum der Aufsatzhülse 6, der durch den Steg 25 und den Führungsflansch 8 begrenzt ist, ist eine Schraubenfeder 7 eingesetzt. Dabei kommt das vordere Ende der Feder 7 an der Innenseite des Führungsflansches 8 zu liegen, wobei die hintere Windung der Feder in ihrem Umfang mittels des Steges 25 etwas zusammengedrückt wird und somit besser an die Außenseite des Anschlags 9 zu liegen kommt.

Beim Aufsetzen der Gegenlagereinrichtung 3 wird die Aufsatzhülse 6 gegen den Federdruck in Richtung Widerlager 11 bewegt, bis der Ring 10 über den Haken des Widerlagers 11 gelegt werden kann. Nach dem Einlegen des Rings 10 in den Haken 11 entspannt sich die Feder 7 etwas, aber sie speichert genügend Druckenergie, um die Aufsatzhülse 6 nach vorn zur Bohrerspitze zu drängen. Dadurch wird der Ring 10 fest an den Haken 11 herangezogen.

Auf diese Art und Weise ist ein Festlegen und Entfernen der Gegenlagereinrichtung 3 ohne irgendwelche Montagevorgänge oder Lösen von Schrauben und dergleichen durch bloßes Einhängen ermöglicht. Da für unterschiedliche Arbeitsgänge unterschiedliche Gegenlagereinrichtungen 3 mit entsprechender Ausgestaltung der Bügel 17 vorgesehen sein können, macht es auch keine Schwierigkeiten, das Gerät für bestimmte Arbeitsvorgänge umzurüsten. In jedem Fall kann das Handbohrwerkzeug 1 ohne Schwierigkeiten an Raumerfordernisse während des Arbeitsvorganges angepaßt werden, indem die Aufsatzhülse 6 praktisch über den gesamten Umfang verdrehbar ist. Dabei ist die Handhabung denkbar einfach, da zum Verdrehen des Bügels keine Feststelleinrichtungen oder ähnliches vorher gelöst werden müssen. Die in der Aufsatzhülse 6 befindliche Feder 7 bewirkt dabei, daß die Aufsatzhülse 6 und damit die Gegenlagereinrichtung 3 in ihrer jeweiligen Winkelstellung verbleibt. Der Hebel 4 ist vor dem Hebelhandgriff 5 durch eine Feder 14 am Bohrmaschinenkörper 2 abgestützt und kommt vorzugsweise bei Betätigung in eine Ausnehmung 15 am Bohrmaschinenhandgriff zu liegen.

Beim Betätigen des Handbohrwerkzeugs 1 und damit des Hebelgriffs 5 in Richtung des Bohrmaschinengriffs wird die Hebelkraft über die Nocken 24 auf den Flansch 13 und von dort auf die Aufsatzhülse 6 bzw. den Gegenlagerbügel 17 übertragen, da der Kopf 33 des Hebels 4 durch den Ring 10 am Haken 11 festgehalten wird. Gleichzeitig wird die Gegenlagereinrichtung 3 gegen den Federdruck über den Führungsring 9 gezogen. Der Federdruck entsteht dadurch, daß die Feder 7 gegen den Anschlag 9 und die Innenseite des Führungsflansches 8 gedrückt wird. Die Bewegung der Aufsatzhülse 6 endet, indem ihr Flansch 13 mit einem Anschlagring 42 in Berührung kommt, der den Haken 11 trägt. Gleichzeitig wird über die auf dem Hebel 4 sitzende Feder 14 der Einschaltknopf 43 der Maschine betätigt und diese in Gang gesetzt. Dabei bewirkt die Konstruktion ein Übersetzungsverhältnis der Kräfte von etwa 1:4, d. h. z. B. 10 kg Kraft am Hebel 5 ergeben 40 kg Anpreßdruck am Gegenlager 19. Ist der Arbeitsvorgang beendet, wird der Hebelgriff 5 wieder freigegeben, und die Gegenlagereinrichtung 3 wird durch den Federdruck in seine Ausgangslage zurückgedrängt.

Bei Einstellung der Bohrtiefe an der Handbohrmaschine 2 ist zwischen Bohrfutter 20 und Bohrmaschinenhals 26 angeordneter Drehring 22 sowie ein Tiefenanschlag 18 vorgesehen. Der Tiefenanschlag 18 besteht aus zwei gegenüberliegenden Armen 28, deren Innenflächen jeweils als Steg 29 ausgebildet sind, wobei der Steg 29 eine radiale Innenwölbung aufweisen, innerhalb derer die Bohrerspitze rotiert. Jeder Steg 29 endet in einem vorbestimmten Abstand unterhalb der Stirnseite des Tiefenanschlags 18 und bildet auf diese Weise eine Einkerbung oder Nut 21, die als Markierung für die Bohrtiefeneinstellung dient. Die Bohrtiefe ist mittels Drehring 22 genau voreinstellbar, wobei der Drehring 22 nur den Tiefenanschlag 18 verschiebt, der Bohrer selbst aber unbeweglich bleibt. Eine für das Aufbohren von Schweißpunkten übliche Bohrtiefe, insbesondere in der Autoindustrie, ist eingestellt, wenn die Stirnseite 30 des Bohrers mit der Einkerbung 21 an dem Tiefenanschlag 18 fluchtet.

Die Erfindung hat damit ein Handbohrwerkzeug geschaffen, das an unterschiedlich tief gelegene Bohrstellen herangeführt werden kann, da die Aufsatzhülse in Bezug auf den Hebel um 360° verdrehbar ist und Aufsatzhülsen für unterschiedliche Arbeitsgänge Gegenlager mit unterschiedlicher Bügelausgestaltung verfügbar sind. Die Gegenlagereinrichtungen sind ohne Montageaufwand einfach abnehmbar, und das Handbohrwerkzeug läßt sich bequem mit einer Hand bedienen.

## Patentansprüche

1. Handbohrwerkzeug, insbesondere zum Ausbohren von Punktschweißstellen mit einer an dem Bohrmaschinenkörper (2) lösbar angebrachten Gegenlagereinrichtung (3), die über einen Betätigungshebel (4), der in einen Handgriff (5) ausläuft, in Richtung der Bohrachse (23) verschiebbar ist,
dadurch gekennzeichnet,
daß der Hebel (4) an einer Aufsatzhülse (6) angreift, die den Bohrmaschinenkörper (2) umschließt und an der die Gegenlagereinrichtung (3) angebracht ist,
daß die Aufsatzhülse (6) in Bezug auf den Bohrmaschinenkörper (2) axial verschiebbar ausgebildet ist,
daß die Aufsatzhülse (6) in Bezug auf den Hebel (4) verdrehbar ist und
daß die Achse (31) des an der Aufsatzhülse (6) angreifenden Hebels (4) die Achse (23) des Bohrmaschinenkörpers (2) schneidet.

2. Werkzeug nach Anspruch 1,
dadurch gekennzeichnet, daß eine Feder (7) die Aufsatzhülse (6) nach vorn drängt.

3. Werkzeug nach Anspruch 2,
dadurch gekennzeichnet, daß die Feder (7) aus einer Schraubenfeder besteht, die im Inneren der Aufsatzhülse (6) angeordnet ist, den Bohrmaschinenkörper (2) umschließt und am vorderen Ende auf einem Führungsflansch (8) abgestützt ist, dessen Innendurchmesser dem Außendurchmesser des Bohrmaschinenkörpers (2) entspricht und dessen rückwärtiges Ende gegen einen Anschlag (9) am Bohrmaschinenkörper (2) zu liegen kommt.

4. Werkzeug nach Anspruch 3,
dadurch gekennzeichnet, daß der Anschlag (9) am Bohrmaschinenkörper (2) als Führungsring ausgebildet ist, dessen Außendurchmesser dem Innendurchmesser der Führungshülse (6) entspricht.

5. Werkzeug nach einem der Ansprüche 1 bis 4,
dadurch gekennzeichnet, daß an dem dem Handgriff (5) gegenüberliegenden Ende des Hebels ein Halteglied (10) vorgesehen ist, das an einem Widerlager (11) am Bohrmaschinenkörper (2) eingehängt ist.

6. Werkzeug nach Anspruch 5,
dadurch gekennzeichnet, daß das Halteglied (10) aus einem Ring besteht und daß das Widerlager (11) ein Haken ist, in den der Ring (10) bei einer Bewegung der Aufsatzhülse (6) gegen die Federkraft einlegbar ist.

7. Werkzeug nach einem der Ansprüche 1 bis 6,
dadurch gekennzeichnet, daß der Hebel (4) an dem dem Handgriff (5) gegenüberliegenden Ende in zwei halbringförmig ausgebildete, die Aufsatzhülse umschließende Arme (12) ausläuft, die sich an dem an einem rückwärtigen Ende (32) der Aufsatzhülse (6) vorstehenden Flansch (13) vorzugsweise nockenförmig abstützen.

8. Werkzeug nach einem der Ansprüche 1 bis 7,
dadurch gekennzeichnet, daß der Hebel (4) vor dem Hebelhandgriff (5) durch eine Feder (14) am Bohrmaschinenkörper (2) abgestützt ist und daß bei Betätigung vorzugsweise der Hebelhandgriff (5) in eine Ausnehmung (15) am Bohrmaschinenhandgriff zu liegen kommt.

9. Werkzeug nach einem der Ansprüche 1 bis 8,
dadurch gekennzeichnet, daß die Stirnseite (16) des dem Gegenlager (17) gegenüberliegenden Tiefenlagers (18) mit Riffelungen versehen ist.

10. Werkzeug nach einem der Ansprüche 1 bis 9,
dadurch gekennzeichnet, daß die Gegenlagereinrichtung (3) mit einer Einstellschraube (19) als dem Tiefenlager (18) gegenüberliegendem Gegenlager (17) versehen ist.

11. Werkzeug nach einem der Ansprüche 1 bis 10,
dadurch gekennzeichnet, daß zwischen Aufsatzhülse (6) und Bohrfutter (20) zur Einstellung des Bohrers entsprechend einer Markierung, vorzugsweise in Form einer Einkerbung oder Nut (21), ein Drehring (22) vorgesehen ist.

12. Werkzeug nach einem der Ansprüche 1 bis 11,
dadurch gekennzeichnet, daß die Aufsatzhülse (6) für unterschiedliche Arbeitsgänge Gegenlager (17) mit unterschiedlicher Bügelausgestaltung trägt.

13. Werkzeug nach einem der Ansprüche 1 bis 12,
dadurch gekennzeichnet, daß ein Übersetzungshebelgetriebe (24, 33) die am Hebel (5) angreifende Kraft zu einem erhöhten Anpreßdruck am Gegenlager (19) verstärkt.

## Claims

1. A hand drilling tool, more particularly for drilling out spot welds, comprising a support means (3) releasably mounted on the drill body (2) and displaceable in the direction of the drilling axis (23) via an actuating lever (4) terminating in a handle (5), characterised in that the lever (4) acts on an attachment sleeve (6) which surrounds the drill body (2) and on which the support means (3) is mounted, in that the attachment sleeve (6) is constructed for axial displacement with respect to the drill body (2), in that the attachment sleeve (6) is adapted to turn with respect to the lever (4) and in that the axis (31) of the lever (4) acting on the attachment sleeve (6) intersects the axis (23) of the drill body (2).

2. A tool according to claim 1, characterised in that a spring (7) presses the attachment sleeve (6) forward.

3. A tool according to claim 2, characterised in that the spring (7) consists of a coil spring which is disposed inside the attachment sleeve (6), surrounds the drill body (2), and is supported at the front end on a guide flange (8), the inside diameter of which is equivalent to the outside diameter of the drill body (2), and the rear end of which abuts a stop (9) on the drill body (2).

4. A tool according to claim 3, characterised in that the stop (9) on the drill body (2) is constructed as a guide ring, the outside diameter of which is equivalent to the inside diameter of the guide sleeve (6).

5. A tool according to any one of claims 1 to 4, characterised in that a retaining element (10) is disposed on that end of the lever which is remote from the handle (5) and is engaged in an abutment (11) on the drill body (2).

6. A tool according to claim 5, characterised in that the retaining element (10) consists of a ring and in that the abutment (11) is a hook in which the ring (10) can be inserted on movement of the attachment sleeve (6) against spring force.

7. A tool according to any one of claims 1 to 6, characterised in that the lever (4) terminates, at the end remote from the handle (5), in two arms (12) which are in the form of half rings and enclose the attachment sleeve and bear, preferably in the form of cams, on the flange (13) projecting from a rear end (32) of the attachment sleeve (6).

8. A tool according to any one of claims 1 to 7, characterised in that the lever (4) is borne against the drill body (2) in front of the lever handle (5) by a spring (14) and that on actuation the lever handle (5) preferably comes to rest in a recess (15) on the drill handle.

9. A tool according to any one of claims 1 to 8, characterised in that the end face (16) of the depth stop (18) remote from the support (17) is provided with grooving.

10. A tool according to any one of claims 1 to 9, characterised in that the support means (3) is provided with an adjustment screw (19) as an abutment situated opposite the depth stop (18).

11. A tool according to any one of claims 1 to 10, characterised in that a rotating ring (22) is provided between the attachment sleeve (6) and the chuck (20) for adjustment of the drill in accordance with a marking, preferably in the form of a notching or groove (21).

12. A tool according to any one of claims 1 to 11, characterised in that the attachment sleeve (6) has support means (17) with different bow constructions for different operations.

13. A tool according to any one of claims 1 to 12, characterised in that a transmission lever mechanism (24, 25) boosts the force acting on the lever (5) to give increased application pressure at the abutment (19).

## Revendications

1. Perceuse à main, pour l'alésage d'emplacements de soudage par points notamment, comportant un dispositif de butée (3), qui est placé de manière amovible sur le corps de perceuse (2) et, qui, par l'intermédiaire d'un levier de manoeuvre (4) se terminant par une poignée (5) est mobile en direction axiale (23) de la perceuse,
caractérisée
en ce que le levier (4) est en prise sur un manchon de garniture (6), qui entoure le corps de perceuse (2) et sur lequel est mis en place le dispositif de butée (3),
en ce que le manchon de garniture (6) est déplaçable axialement par rapport au corps de perceuse (2),
en ce que le manchon de garniture (6) peut pivoter par rapport au levier (4) et
en ce que l'axe (31) du levier (4) en prise sur le manchon de garniture (6) coupe l'axe (23) du corps de perceuse (2).

2. Perceuse selon la revendication 1,
caractérisée en ce qu'un ressort (7) pousse vers l'avant le manchon de garniture (6).

3. Perceuse selon la revendication 2,
caractérisée en ce que le ressort (7) est un ressort à boudin placé à l'intérieur du manchon de garniture (6) entourant le corps de perceuse (2), prenant appui à son extrémité avant sur un collet de guidage (8), dont le diamètre interne correspond au diamètre externe du corps de perceuse (2) et dont l'extrémité arrière vient se placer contre un butoir (9) sur le corps de perceuse (2).

4. Perceuse selon la revendication 3, caractérisée en ce que le butoir (9) sur le corps de perceuse
(2) est une bague de guidage, dont le diamètre externe correspond au diamètre interne du manchon de garniture (6).

5. Perceuse selon l'une des revendications 1 à 4,
caractérisée en ce que, à l'extrémité du levier opposée à la poignée (5) est prévu un élément de retenue (10), qui est accroché à un arrêtoir (11) sur le corps de perceuse (2).

6. Perceuse selon la revendication 5,
caractérisée en ce que l'élément de retenue (10) est un anneau et en ce que l'arrêtoir (11) est un crochet, dans lequel l'anneau (10) vient, contre la force du ressort, s'encastrer lors d'un mouvement du manchon de garniture(6).

7. Perceuse selon l'une des revendications 1 à 6,
caractérisée en ce que, à l'extrémité opposée à la poignée (5), le levier (4) se termine en deux bras (12) de forme semi-circulaire entourant le manchon de garniture, lesquels, sous la forme d'une came de préférence, s'appuient contre le collet (13), qui fait saillie à l'extrémité arrière (32) du manchon de garniture (6).

8. Perceuse selon l'une des revendications 1 à 7,
caractérisée en ce que le levier (4) prend, avant la poignée (5), appui, par l'intermédiaire d'un ressort (14) sur le corps de perceuse (2) et en ce que, lors du fonctionnement, la poignée du levier (5) vient, de préférence, dans un évidement (15) de la poignée de perceuse.

9. Perceuse selon l'une des revendications 1 à 8,
caractérisée en ce que la face frontale (16) de la butée de profondeur (18) opposée à la butée (17) est pourvue de cannelures.

10. Perceuse selon l'une des revendications 1 à 9,
caractérisée en ce que le dispositif de butée (3) est, en tant que butée (17) opposée à la butée de profondeur (18), pourvue d'une vis d'ajustage (19).

11. Perceuse selon l'une des revendications 1 à 10,
caractérisée en ce qu'un anneau tournant (22) est prévu, entre le manchon de garniture (6) et le mandrin (20) pour le positionnement du foret, en correspondance avec un repère, de préférence sous forme d'une entaille ou d'une rainure (21).

12. Perceuse selon l'une des revendications 1 à 11,
caractérisée en ce que le manchon de garniture (6) porte pour des opérations différentes une butée (17) comportant une configuration d'étrier différente.

13. Perceuse selon l'une des revendications 1 à 12,
caractérisée en ce qu'une démultiplication du levier (24,33) renforce la force agissant sur celui-ci par une augmentation de la pression d'appui sur la butée (19).
